# EUROPÄISCHE PATENTANMELDUNG

(11) **EP 0 899 841 A1**
(43) Veröffentlichungstag der Anmeldung: **03.03.1999**
(21) Anmeldenummer: 98111404.4
(22) Anmeldetag: 20.06.1998
(51) Int. Cl.: H02B 1/052

(54) **Vorrichtung zur Schnellbefestigung eines elektrischen Installationsgerätes auf einer Normprofiltragschiene**

(30) Priorität: 29.08.1997 DE 19737762
(71) Anmelder: ABB PATENT GmbH, 68309 Mannheim (DE)
(72) Erfinder: Goehle, Rolf, Dipl.-Ing., 69181 Leimen (DE); Eppe, Klaus-Peter, Dipl.-Ing., 69429 Waldbrunn (DE); Kalchschmidt, Peter, Dipl.-Ing., 76689 Karlsdorf (DE); Muders, Erwin, Ing.-grad, 69126 Heidelberg (DE); Wieland, Ralf, Dipl.-Ing., 69429 Waldbrunn (DE)
(74) Vertreter: Rupprecht, Klaus, Dipl.-Ing.

(57) **Zusammenfassung**

Die Erfindung betrifft eine Vorrichtung zur Schnellbefestigung eines elektrischen Leitungsschutzschalters (10) auf einer Hutprofiltragschiene (17). Der Leitungsschutzschalter besitzt eine feste Nase (14) und eine bewegliche Nase (24), die hinter parallel verlaufende Kanten (16, 18) der Hutprofiltragschiene greifen, wenn der Leitungsschutzschalter auf der Hutprofilschiene montiert ist. Die bewegliche Nase (24) ist an einem Haken (15) gebildet bzw. an diesem angeformt, der am Ende einer Stange (20) angeformt ist. Die Stange (20) greift von der Bodenseite des Leitungsschutzschalters bis hin zur Bedienseite durch den Leitungsschutzschalter (10) hindurch und kann demgemäß von vorn mittels eines Werkzeuges betätigt werden, so daß durch Verdrehen der Stange (20) die Nase (24) außer Eingriff mit der Hutprofiltragschiene bringbar ist, wobei durch Verdrehen der Stange der Haken in eine Vertiefung (25) an der Bodenseite des Leitungsschutzschalters einrasten kann. Durch Drücken der Stange (20) kann umgekehrt die Nase (24) wieder hinter die Kante (18) der Hutprofilschiene (17) geschnappt werden.

## Beschreibung

Die Erfindung betrifft eine Vorrichtung zur Schnellbefestigung eines elektrischen Installationsgerätes auf einer Normprofiltragschiene gemäß dem Oberbegriff des Anspruches 1.

Derartige Vorrichtungen sind in großer Zahl bekannt. Im allgemeinen besitzt ein elektrisches Installationsgerät an der Unterseite eine Vertiefung, an deren einen Seite eine feste Nase und an deren anderer Seite eine bewegbare Nase angeformt ist; meist werden derartige Installationsgeräte auf eine Hutprofiltragschiene aufgebracht, wobei die eine Kante der Hutprofiltragschiene hinter die feste Nase und die andere Kante der Hutprofiltragschiene hinter die bewegliche Nase greift.

Zur Bildung der Nase sind viele Arten von Schieberkonstruktionen bekannt geworden, die am Boden des Installationsgerätes senkrecht zur Hutprofilschiene und parallel zum Boden verschieblich angebracht sind und dabei immer unter dem Druck einer Feder in Richtung Hutprofilschiene beaufschlagt sind.

Zur Montage des Installationsgerätes wird die feststehende Nase hinter die eine Kante gehängt und die bewegliche Nase über die andere geschnappt. Zur Demontage wird der Schieber mit der beweglichen Nase von der Hutprofilschiene weggezogen, was mit einem Werkzeug erfolgt; sodann kann das Installationsgerät um die feststehende Nase

drehend abgezogen werden. Normalerweise sind mehrere Leitungsschutzschalter nebeneinander auf einer Hutprofiltragschiene angeordnet, wobei die Klemmen auf einer Seite mittels einer Stromsammelschiene miteinander verbunden sind. Wenn einer der Leitungsschutzschalter beispielsweise defekt ist und ausgetauscht werden muß, dann muß die Stromsammelschiene ebenfalls demontiert werden, weil sie sonst die Demontage des Leitungsschutzschalters behindert. Das hat zur Folge, daß alle diejenigen Stromkreise, die mit den daneben angeordneten Leitungsschutzschalter abgesichert sind, stromlos werden.

Um diesen Nachteil zu vermeiden, sind zwischenzeitlich Vorrichtungen der eingangs genannten Art bekannt geworden, die gestatten, daß der Leitungsschutzschalter oder allgemein das Installationsgerät parallel zur Befestigungsebene soweit verschoben werden kann, daß die Anschlußklemme von der Stromsammelschiene freikommt, so daß der Leitungsschutzschalter ohne Behinderung durch die Stromsammelschiene abgezogen werden kann.

Alle diese bekannten Befestigungsvorrichtungen werden dadurch betätigt, daß der Schieber oder ein anderes entsprechendes Bauteil am Befestigungsboden mittels eines Werkzeuges verschoben wird, indem das Werkzeug in einen Schlitz am Schieber eingesteckt und verschwenkt wird, so daß der Schieber durch Hebelwirkung verschoben wird.

Unter bestimmten Umständen ist dieses nachteilig, weil der Zugang zu der Befestigungsvorrichtung, die sich etwa in der Ebene der Hutprofiltragschiene befindet, sehr beengt sein kann.

Aufgabe der Erfindung ist es, eine Vorrichtung der eingangs genannten Art zu schaffen, bei der eine Betätigung unabhängig von dem Zugangsraum möglich ist.

Diese Aufgabe wird erfindungsgemäß gelöst durch die kennzeichnenden Merkmale des Anspruches 1.

Erfindungsgemäß also besitzt das Installationsgerät, vorzugsweise der Leitungsschutzschalter, eine Stange mit einem im Bereich der Befestigungsebene vorgesehenen und an der Stange angebrachten Haken; die Stange durchgreift den Leitungsschutzschalter und ragt aus der Frontseite des Leitungsschutzschalters oder allgemein des Installationsschaltgerätes heraus. Auf diese Weise kann die Befestigungsvorrichtung bzw. die Vorrichtung zur Schnellbefestigung durch Betätigung der Stange gelöst oder verrastet werden. Probleme des beengten Zuganges zur Hutprofilschiene bzw. zur Schnellbefestigungsvorrichtung sind dadurch vermieden.

Die Stange kann dabei dauernd unter der Kraft einer Feder stehen, die diese nach außen herausdrückt und die darüber hinaus auch die Stange so drehend beaufschlagt, daß der Haken dauernd in Richtung Verriegelungsstellung, also in diejenige Richtung gedrückt ist, in der der Haken, an dem die bewegliche Nase angeformt ist, hinter die Hutprofilschiene gerastet ist.

Zur vereinfachten Demontage des Installationsgerätes befindet sich an der Bodenseite des Installationsgerätes eine Vertiefung, in die der Haken mittels der Stange schwenkbar ist und die aufgrund der Federkraft darin verschwindet, so daß das Installationsgerät von der Normprofiltragschiene durch einfaches Verschieben abnehmbar ist. Durch entsprechende Ausgestaltung der an der Bodenseite befindlichen Ausnehmung, in die ja die feste und die bewegliche Nase hineingreifen, kann das Installationsgerät parallel zur Hutprofilschienenebene soweit verschoben werden, daß die mit der oben genannten Stromsammelschiene in Verbindung stehende Anschlußklemme von dieser freikommt, so daß das Installationsgerät senkrecht zur Hutprofilschienenebene abgezogen bzw. abgehoben werden kann.

Weitere vorteilhafte Ausgestaltungen und Verbesserungen der Erfindung sind den weiteren Unteransprüchen zu entnehmen.

Wenn die Normprofiltragschiene eine Hutprofilschiene ist, dann befindet sich in der Montagestellung der Haken mit der beweglichen Nase in der Stellung, in der die Nase gegen die Kante der Hutprofilschiene gedrückt ist. In dieser Stellung befindet das von der Frontseite aus zugängliche Stirnende der Stange in der Ebene der Frontwand des Installationsgerätes. Um das Installationsgerät zu demontieren, wird mittels eines Werkzeuges, z. B. eines Schraubendrehers, die Stange mit dem Haken verschwenkt und aufgrund der Kraft der Feder schnappt der Haken in die Vertiefung am Boden des Installationsgerätes. Dabei kommt das Stirnende der Stange aus der Frontwand heraus, und zwar um den Betrag, der der Tiefe der Vertiefung entspricht. Damit wird das Installationsgerät frei und kann entfernt werden, in dem es quer zur Hutprofilschiene soweit verschoben wird, bis die Klemme von der Sammelschiene freikommt. Dann kann das Installationsgerät quer zu der Ebene, die durch die Hutprofilschiene gebildet ist, bzw. quer zur Bodenebene bzw. Befestigungsebene des Installationsgerätes abgezogen werden, ohne daß die Sammelschiene die Demontage behindert. Die Sammelschiene kann dabei montiert bleiben; ein Abschalten der an der Sammelschiene angeschlossenen übrigen Verbraucher ist nicht nötig.

Um das Installationsgerät aufzuschnappen, wird die Stange nach innen gedrückt, bis der Haken aus der Vertiefung freikommt. Dabei verdreht die Feder den Haken mit der Stange in die Stellung, in der die bewegbare Nase hinter die Hutprofilschiene greifen kann; somit kann das Installationsgerät wieder auf die Hutprofilschiene aufgeschnappt werden. Das Stirnende der Stange befindet sich dabei wieder in der Ebene der Frontwand.

Anhand der Zeichnung, in der ein Ausführungsbeispiel der Erfindung dargestellt ist, sollen die Erfindung sowie weitere vorteilhafte Ausgestaltungen und Verbesserungen der Erfindung und weitere Vorteile näher erläutert und beschrieben werden.

Es zeigen:
- Fig. 1: eine Seitenansicht auf einen Leitungsschutzschalter in montiertem Zustand,
- Fig. 2: eine Ansicht von unten auf den Leitungsschutzschalter gemäß Fig. 1,
- Fig. 3: eine Schnittansicht durch den Leitungsschutzschalter im Bereich der Schnellbefestigung, und
- Fig. 4: eine Aufsicht von unten auf den Leitungsschutzschalter mit eingezogener Schnellbefestigung.

Der Leitungsschutzschalter 10 besitzt eine Bedienseite 11 (das Bedienorgan ist nicht dargestellt) sowie eine Bodenseite 12, auf der eine Ausnehmung 13 angeordnet ist, die eine sog. feststehende Nase 14 und eine bewegliche Nase 24 (siehe weiter unten) aufweist. Die feststehende Nase 14 hintergreift einen Schenkel 16 einer Hutprofiltragschiene 17, wogegen die bewegbare Nase 24 den anderen Schenkel 18 hintergreift. Der Leitungsschutzschalter 10 besitzt weiterhin nicht näher dargestellte Anschlußklemmen in den Bereichen A und B, und die Anschlußklemme im Bereich A, die oberhalb der bewegbaren Nase 24 angeordnet ist, ist normalerweise an eine Stromsammelschiene angeschlossen, die mehrere nebeneinander auf der Hutprofiltragschiene 17 aufgereihte Leitungsschutzschalter elektrisch miteinander verbindet. Im Bereich dieser Klemme im Bereich A ist die Ausnehmung 13 um einen Ausnehmungsabschnitt 13_{A} verbreitert, dessen Breite T so bemessen ist, daß nach Lösen der bewegbaren Nase 24 (wie dies erfolgt, soll weiter unten näher erläutert werden) und Verschieben des Leitungsschutzschalters in Pfeilrichtung P die Anschlußklemme im Bereich A von der Stromsammelschiene freikommt, so daß der Leitungsschutzschalter in Pfeilrichtung P₁, senkrecht zur Hutprofilschienenebene, abgehoben werden kann.

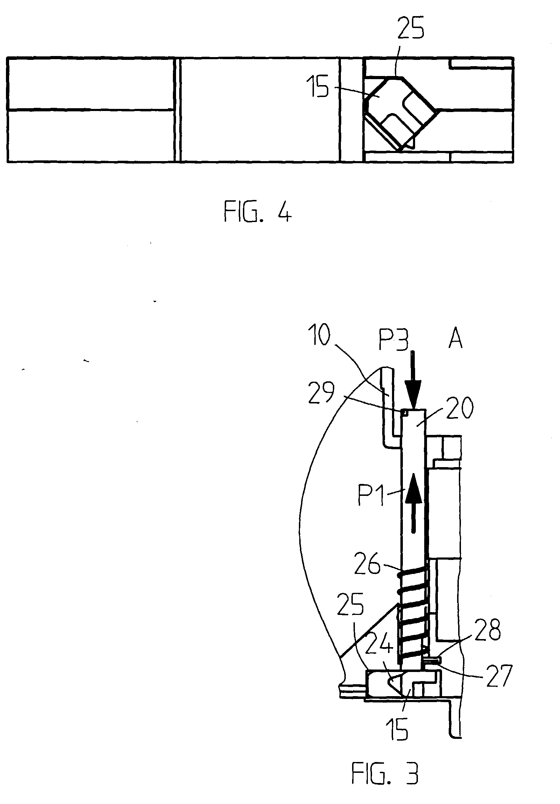

Es sei nun Bezug genommen auf die Fig. 3.

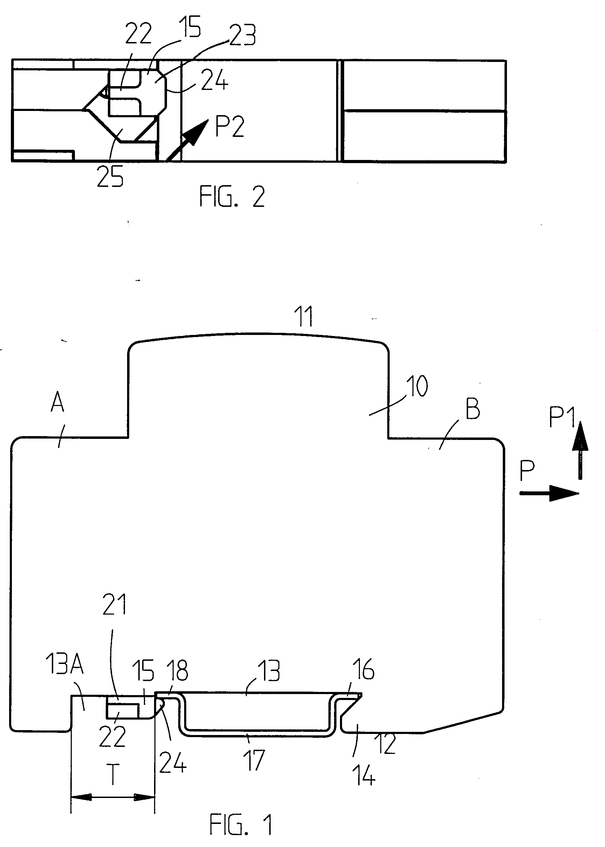

Der Leitungsschutzschalter im Bereich A ist von einer Stange 20 durchgriffen, an deren unterem Ende ein Haken 15 angeformt ist, der, wie aus den Fig. 1 und 2 ersichtlich ist, eine quer zu der Stange 20 verlaufende Platte 21 aufweist, wobei an der Außenseite der Haken 15 eine T-Form 22 zur Verstärkung vorspringt, deren Quersteg 23 die bewegbare Nase 24 trägt. Auf der Bodenseite im Bereich 13_{A} der Ausnehmung 13 befindet sich eine Vertiefung 25, deren lichte Abmessungen den Abmessungen des Hakens 15 entsprechen.

An der Stange 20 ist eine Schraubenfeder 26 angebracht, die diese umfaßt und deren hakenseitiges Ende 27 ortsfest in einer Öffnung 28 festgelegt ist. Das andere, nicht näher dargestellte Ende ist an der Stange 20 fixiert. Die Feder 26 ist so zur Stange 20 angeordnet und mit dieser verbunden, daß sie die Stange 20 dauernd in Pfeilrichtung P₁, die die gleiche Richtung wie die Richtung, in der der Leitungsschutzschalter 10 von der Hutprofilschiene 17 abgezogen werden kann, ist, beaufschlagt, und sie wirkt außerdem mit einem Drehmoment auf die Stange 20, das bei der Ausgestaltung und Ansicht gemäß Fig. 2 die Stange 20 und damit den Haken 15 dauernd entgegen dem Uhrzeigersinn in Pfeilrichtung P₂ zu drehen sucht.

Wenn nun die Schnellbefestigungsvorrichtung aus der Stellung gemäß Fig. 1 gelöst werden soll, dann wird die Stange 20 mittels eines Werkzeuges, beispielsweise eines Schraubensdrehers, der in einen Schlitz 29 am freien Stirnende der Stange 20 eingreifen kann, im Uhrzeigersinn verschwenkt und zwar entgegen dem Drehmoment der Feder 26, bis der Haken 15 mit der Vertiefung 25 fluchtet; in diesem Fall drückt die Feder 26 die Stange 20 zusammen mit dem Haken 15 in die Vertiefung 25 hinein, wie dies in der Fig. 3 sichtbar ist. In entsprechender Weise ist die Vertiefung 25 an den Umriß des Hakens 15 angepaßt. Der Haken 15 verschwindet in der Vertiefung 25. Dabei gelangt die Stange 20 aus der Frontseite des Leitungsschutzschalters 10 heraus und zwar um den Betrag, der der Tiefe der Vertiefung 25 entspricht Der Leitungsschutzschalter kann um den Betrag T in Pfeilrichtung P verschoben und dann in Pfeilrichtung P₁ abgehoben werden, so daß die Anschlußklemme im Bereich A von einer Sammelschiene freikommt, ohne daß diese demontiert werden muß.

Um den Leitungsschutzschalter wieder zu verrasten, wird die Stange 20 gemäß Pfeilrichtung P₃ nach innen gedrückt, so daß der Haken 15 aus der Vertiefung 25 herausgelangt. Die Feder 26 übt das Drehmoment auf die Stange 20 aus und der Haken 15 wird von der Feder 26 in die Verrastungsstellung verschwenkt, die in der Fig. 2 sichtbar ist und in der die bewegliche Nase 24 gegen die Kante der Hutprofilschiene drückt.

Weitere Komponenten des Leitungsschutzschalters, insbesondere bestimmte im Inneren befindliche Komponenten, sind der Übersicht weggelassen.

Die Erfindung ist anhand einer Hutprofilschiene beschrieben; sie ist auch anwendbar bei Installationsgeräten, die auf eine C-Profiltragschiene aufgerastet werden.

## Patentansprüche

1. Vorrichtung zur Schnellbefestigung eines elektrischen Installationsgerätes, vorzugsweise eines Leitungs- oder Fehlerstromschutzschalters, auf einer Normprofiltragschiene, vorzugsweise auf einer Hutprofiltragschiene, mit einer festen Nase (14) und einer federnd gegen die Hutprofiltragschiene (17) beaufschlagten beweglichen Nase (24), die am Boden des Installationsgerätes angerodnet sind und hinter parallel verlaufende Kanten (16, 18) der Normprofiltragschiene greifen, wobei die bewegliche Nase (24) federnd gegen die Kante (18) gedrückt ist, dadurch gekennzeichnet, daß die bewegliche Nase (24) an einem Haken (15) gebildet ist, der am Ende einer Stange (20) angeformt ist, daß sich die Stange (20) vom Boden bis zur Bedienseite des Installationsgerätes (10) erstreckt und dieses durchgreift und von vorn, also von der Bedienseite her, zum Bewegen des Hakens (15) an die Kante und von dieser weg betätigbar ist.

2. Vorrichtung nach Anspruch 1, dadurch gekennzeichnet, daß die Stange (20) unter der Kraft einer Feder (26) dauernd nach außen, also in Richtung der Bedienseite, gedrückt ist.

3. Vorrichtung nach Anspruch 2, dadurch gekennzeichnet, daß die Kraft der Feder (26) außerdem so auf die Stange (20) einwirkt, daß der Haken (15) dauernd in Richtung Verriegelungsstellung beaufschlagt ist, d. h. dauernd so beaufschlagt ist, daß die am Haken (15) angeformte Nase (24) hinter die Kante greifen kann.

4. Vorrichtung nach einem der vorherigen Ansprüche, dadurch gekennzeichnet, daß an der Bodenseite eine Vertiefung (25) vorgesehen ist, deren Form der Form des Hakens (15) gleicht, so daß der Haken (15) mittels der Stange in die Vertiefung (25) schwenkbar ist und darin verschwindet, so daß das Installationsgerät (10) von der Normprofiltragschiene abnehmbar ist.

5. Vorrichtung nach Anspruch 4, dadurch gekennzeichnet, daß die Stange (20) mittels eines Werkzeuges verdrehbar ist, so daß der Haken aus der Verriegelungsstellung herausgeschwenkt wird und unter der Kraft der Feder (26) automatisch in die Vertiefung (25) hineinschnappt und dabei sich die Stange (20) um den Betrag der Tiefe der Vertiefung (25) aus der Frontseite herausragt.

6. Vorrichtung nach Anspruch 5, dadurch gekennzeichnet, daß durch Hineindrücken der Stange (20) in die Frontseite der Haken (15) aus der Vertiefung herausdrückbar ist, so daß er nach Herausdrücken aus der Vertiefung automatisch durch das Drehmoment der Feder (26) in die Verriegelungsstellung geschwenkt wird.
